# EUROPÄISCHE PATENTANMELDUNG

(11) **EP 4 365 016 A1**
(43) Veröffentlichungstag der Anmeldung: **08.05.2024**
(21) Anmeldenummer: 23203813.3
(22) Anmeldetag: 16.10.2023
(51) Int. Cl.: B60N 2/06, B60N 2/02, F16D 3/10, F16D 3/18, F16D 3/50

(54) **LÄNGSEINSTELLER FÜR EINEN FAHRZEUGSITZ SOWIE FAHRZEUGSITZ**

(30) Priorität: 01.11.2022 DE 102022211556
(71) Anmelder: Adient US LLC, Plymouth, MI 48170 (US)
(72) Erfinder: QUAST, Ingo, 40477 Duesseldorf (DE); SPRENGER, Erik, 42929 Wermelskirchen (DE)
(74) Vertreter: Liedtke & Partner Patentanwälte

(57) **Zusammenfassung**

Die Erfindung betrifft einen Längseinsteller (110), umfassend mindestens:
- ein Schienenpaar (118) und
- eine Antriebseinrichtung (120) für das Schienenpaar (118),

wobei das Schienenpaar (118) eine erste Schiene (114) und eine zweite Schiene (116) aufweist, an der die erste Schiene (114) verschiebbar geführt ist,
wobei die Antriebseinrichtung (120) mindestens einen Getriebemotor (122) mit einer Abtriebswelle (140), einem Motor (124), einer Getriebeeinheit (126), einer über die Getriebeeinheit (126) von der Abtriebswelle (140) antreibbare Spindel (132) und einer Kupplungsanordnung (136) zur Kopplung der Spindel (132) und der Abtriebswelle (140) aufweist,
wobei die Spindel (132) um eine Spindelachse (142) drehbar gelagert ist, dadurch gekennzeichnet, dass
die Kupplungsanordnung (136) eine flexible Kupplung (156) umfasst, die formschlüssig und/oder kraftschlüssig einerseits mit einem Spindelende (132.1) und andererseits mit einem Wellenende (140.1) der Abtriebswelle (140) verbunden ist und eingerichtet ist, Schwingungen zu dämpfen und/oder einen Versatz (157) zwischen Spindelende (132.1) und Wellenende (140.1) auszugleichen. Des Weiteren betrifft die Erfindung einen Fahrzeugsitz (100) mit einem solchen Längseinsteller (110).

## Beschreibung

Die Erfindung betrifft einen Längseinsteller für einen Fahrzeugsitz, insbesondere Kraftfahrzeugsitz, wobei der Längseinsteller mindestens ein Schienenpaar und eine Antriebseinrichtung für das Schienenpaar umfasst, wobei das Schienenpaar eine erste Schiene und eine zweite Schiene aufweist, an der die erste Schiene verschiebbar geführt ist, wobei die Antriebseinrichtung mindestens einen Motor mit einer Abtriebswelle, eine Getriebeeinheit, eine über die Getriebeeinheit von der Abtriebswelle des Motors antreibbare Spindel und eine Kupplungsanordnung zur Kopplung der Spindel und der Abtriebswelle des Motors aufweist, wobei die Spindel um eine Spindelachse drehbar gelagert ist. Die Erfindung betrifft ferner einen Fahrzeugsitz.

### Stand der Technik

Aus der DE 10 2017 218 492 A1 ist ein Längseinsteller, insbesondere für einen Fahrzeugsitz, bekannt. Der Längseinsteller weist mindestens ein Schienenpaar, welches aus einer ersten Schiene und einer relativ zur ersten Schiene in Längsrichtung verschiebbaren zweiten Schiene gebildet ist, auf, wobei die Schienen unter Bildung eines Innenkanals einander wechselseitig umgreifen. In dem Innenkanal sind eine mit der zweiten Schiene gelagerte Spindelmutter und eine mit der Spindelmutter wirkverbundene Spindel angeordnet, wobei an einem Ende der ersten Schiene ein mittels eines Motors antreibbares und mit der Spindel zusammenwirkendes Getriebe angeordnet ist. Die Spindel ist an einem vorderen Endabschnitt der Spindel in dem Getriebe und an einem hinteren Endabschnitt der Spindel in einem Drehlager der ersten Schiene gelagert.

### Aufgabe

Der Erfindung liegt die Aufgabe zu Grunde, einen Längseinsteller der eingangs genannten Art zu verbessern, insbesondere hinsichtlich akustischer Anforderungen zu verbessern sowie einen entsprechenden Fahrzeugsitz bereitzustellen.

### Lösung

Diese Aufgabe wird erfindungsgemäß gelöst durch einen Längseinsteller mit den Merkmalen des Anspruchs 1.

Hinsichtlich des Fahrzeugsitzes wird die Aufgabe erfindungsgemäß durch die Merkmale des Anspruchs 14 gelöst.

Vorteilhafte Ausgestaltungen, welche einzeln oder in Kombination miteinander eingesetzt werden können, sind Gegenstand der Unteransprüche.

Der erfindungsgemäße Längseinsteller umfasst mindestens ein Schienenpaar und eine Antriebseinrichtung für das Schienenpaar, wobei das Schienenpaar eine erste Schiene und eine zweite Schiene aufweist, an der die erste Schiene verschiebbar geführt ist, wobei die Antriebseinrichtung mindestens einen Getriebemotor mit einer Abtriebswelle, einem Motor, einer Getriebeeinheit, einer über die Getriebeeinheit von der Abtriebswelle des Getriebemotors antreibbare Spindel und einer Kupplungsanordnung zur Kopplung der Spindel und der Abtriebswelle des Getriebemotors, insbesondere der Getriebeeinheit, aufweist, wobei die Spindel um eine Spindelachse drehbar gelagert ist und wobei die Kupplungsanordnung eine flexible Kupplung umfasst, die formschlüssig und/oder kraftschlüssig einerseits mit einem Spindelende und andererseits mit einem Wellenende der Abtriebswelle der Getriebeeinheit verbunden und die das Spindelende und das Wellenende flexibel miteinander, insbesondere direkt miteinander, verbindet

Unter einer flexiblen Kupplung wird insbesondere eine elastische oder biegsame Kupplung verstanden.

Beispielsweise kann die flexible Kupplung das Spindelende und das Wellenende derart flexibel miteinander verbinden, dass diese beiden Enden biegsam und/oder stauchbar miteinander verbunden sind. Beispielsweise können sich das Spindelende und das Wellenende mittels der flexiblen Kupplung flexibel aufeinander zubewegen oder voneinander wegbewegen oder einen Winkelversatz ausgleichend relativ zueinander bewegen.

Insbesondere kann die flexible Kupplung das Spindelende und das Wellenende derart flexibel miteinander verbinden, dass die Spindel und die Abtriebswelle schwingungstechnisch voneinander getrennt sind. Mit anderen Worten: Auftretende Schwingungen an der Spindel oder der Welle werden nicht übertragen. Diese auftretenden Schwingungen können von der flexiblen Kupplung aufgenommen und gedämpft, insbesondere reduziert oder vollständig aufgenommen, werden.

Beispielsweise kann die flexible Kupplung das Spindelende und das Wellenende derart flexibel miteinander verbinden, dass diese Enden in mindestens zwei Freiheitsgraden relativ zueinander beweglich gelagert sind. Beispielsweise können das Spindelende und das Wellenende in einer Ebene zur Spindelachse und in einer Ebene senkrecht zur Spindelachse sowie einen Winkelversatz ausgleichend beweglich zueinander gelagert sein.

Insbesondere verbindet die flexible Kupplung das Spindelende und das Wellenende flexibel miteinander und ist eingerichtet, Schwingungen zu dämpfen und/oder einen Versatz zwischen Spindelende und Wellenende auszugleichen.

Dadurch, dass die Kupplungsanordnung eine flexible Kupplung umfasst, lässt sich eine Schwingungsübertragung auf ein Minimum reduzieren. Somit weist ein solcher Längseinsteller verbesserte akustische Eigenschaften auf. Eine solche flexible Kupplung ist eingerichtet, auftretende Schwingungen zu dämpfen und/oder einen auftretenden Versatz, wie zum Beispiel einen Parallelversatz und/oder einen Winkelversatz der zu verbindenden Wellen, insbesondere einen Versatz von Spindel und Abtriebswelle, auszugleichen.

Eine erste Ausführungsform sieht als flexible Kupplung eine Schlauchkupplung vor. Die Schlauchkupplung verbindet die drehbar gelagerte Spindel und die Abtriebswelle des Getriebemotors. Unter einer Schlauchkupplung wird eine flexible Anschlussverbindung zwischen der starren drehbar gelagerten Spindel und der starren drehbaren Abtriebswelle des Getriebemotors mittels einer flexiblen Schlauchleitung verstanden. Die flexible Schlauchleitung ermöglicht ein einfaches und sicheres Verbinden von Spindel und Abtriebswelle. Eine solche als Schlauchkupplung ausgebildete flexible Kupplung weist gute dämpfende Eigenschaften auf und gleicht in besonders einfacher Art und Weise einen Wellenversatz zwischen Spindel und Abtriebswelle aus. Durch eine solche flexible Kupplung kann eine aufwendige Justierung der Wellen innerhalb des Schienenpaares entfallen.

Die Schlauchkupplung kann formschlüssig und/oder kraftschlüssig einerseits mit einem Spindelende der Spindel und andererseits mit einem Wellenende der Abtriebswelle verbunden sein.

Beispielsweise kann die Schlauchkupplung einen Innendurchmesser aufweisen, der kleiner ist als ein Außendurchmesser des Spindelendes und des Wellenendes. Hierdurch kann eine Kraftschlussverbindung, insbesondere eine Reibschlussverbindung, zwischen der Schlauchkupplung und einerseits dem Spindelende und andererseits dem Wellenende erzielt werden.

Alternativ oder zusätzlich können geeignete Rändel vorgesehen sein. Hierdurch kann eine Formschlussverbindung, insbesondere Profilverbindung, wie zum Beispiel eine Zahnwellenverbindung, eine Kreuzrändelverbindung, eine Längsrändelverbindung, zwischen der Schlauchkupplung und einerseits dem Spindelende und andererseits dem Wellenende erzielt werden.

Die Schlauchkupplung kann drehsteif ausgebildet sein. Beispielsweise kann die Schlauchkupplung aus einem umspritzten Gewebe gebildet sein. Mit anderen Worten: Ein Schlauch der flexiblen Kupplung kann durch ein Gewebe, insbesondere ein Textil oder Kunststoffgewebe, gebildet sein, das von einem Kunststoffmaterial umspritzt ist. Die Schlauchkupplung kann als ein Spritzgussteil ausgebildet sein. Beispielsweise kann das Gewebe in entgegengesetzter Anordnung, insbesondere in einer Diagonalanordnung, ausgebildet und umspritzt sein. Durch ein solches umspritztes Gewebe als Schlauchkupplung kann die Drehsteifigkeit zur Übertragung von Drehmomenten zwischen Spindel und Abtriebswelle erhöht werden.

Die Schlauchkupplung kann alternativ aus einem Elastomermaterial oder einem Thermoplastmaterial gebildet sein. Beispielsweise kann ein elastomerer Schlauch oder eine elastomere Hülse oder ein thermoplastischer Schlauch oder eine thermoplastische Hülse vorgesehen sein. Derartige Schläuche oder Hülsen weisen kein verstärkendes Gewebe auf. Darüber hinaus ist die Schlauchkupplung aus einem solchen Material gebildet, dass eine drehmomentübertragende Verbindung zwischen Spindel und Abtriebswelle über die Zeit und unabhängig von Temperaturschwankungen aufrechterhalten bleibt.

Eine zweite Ausführungsform sieht als flexible Kupplung eine Klauenkupplung vor. Die Klauenkupplung kann formschlüssig mit dem Spindelende und dem Wellenende gekoppelt sein. Insbesondere ist die Klauenkupplung primär über Formschluss einerseits mit dem Wellenende und andererseits mit dem Spindelende gekoppelt.

Die Klauenkupplung kann beispielsweise an beiden Enden jeweils mit Klauen versehen sein. Auf dem Spindelende kann formschlüssig ein Mutterelement, zum Beispiel die Spindelmutter, mit stirnseitigen Klauengegenelementen angeordnet sein. Das Mutterelement ist insbesondere auf dem Spindelende verdrehsicher angeordnet. Das Klauengegenelement ist insbesondere auf dem Wellenende verdrehsicher angeordnet.

Eine solche als Klauenkupplung ausgebildete flexible Kupplung kann gegenüber der Schlauchkupplung größer bemessen sein, insbesondere einen größeren Durchmesser aufweisen. Aufgrund solcher größeren Abmessungen kann die Klauenkupplung höhere Drehmomente übertragen.

Eine dritte Ausführungsform sieht als flexible Kupplung eine Ausgleichskupplung vor, die ausgebildet und eingerichtet ist, einen Winkelversatz und/oder einen Parallelversatz zwischen der Spindel und der Abtriebswelle auszugleichen. Die Ausgleichskupplung kann als ein Spritzgussteil ausgebildet sein. Die Ausgleichskupplung kann aus einem Elastomermaterial oder einem Thermoplastmaterial gebildet sein.

Beispielsweise kann die Ausgleichskupplung als eine Hülsenkupplung ausgebildet sein, welche mehrere Ausnehmungen umfasst, die derart ausgebildet und angeordnet sind, dass wechselseitig Biegebereiche und/oder Dehnbereiche gebildet sind, um Verformungen, insbesondere Biegungen beziehungsweise Dehnungen, zuzulassen. Beispielsweise können die Ausnehmungen als Schlitze oder Nuten oder Rillen ausgebildet sein. Die Ausnehmungen können parallel versetzt und/oder senkrecht zueinander angeordnet sein. Beispielsweise können die Ausnehmungen 90° versetzt zueinander (senkrecht zueinander) angeordnet sein.

Die Ausgleichskupplung kann formschlüssig und/oder kraftschlüssig einerseits mit einem Spindelende der Spindel und andererseits mit einem Wellenende der Abtriebswelle verbunden sein. Beispielsweise kann die Ausgleichskupplung mittels einer Klemmverbindung, einer Reibschlussverbindung oder dergleichen einerseits mit einem Spindelende der Spindel und andererseits mit einem Wellenende der Abtriebswelle verbunden sein. Alternativ kann die Ausgleichskupplung mittels einer Stoffschlussverbindung, beispielsweise mittels einer Klebeverbindung oder einer Schweißverbindung, einerseits mit einem Spindelende der Spindel und andererseits mit einem Wellenende der Abtriebswelle verbunden sein.

Die Aufgabe wird ferner erfindungsgemäß gelöst durch einen Fahrzeugsitz mit einem erfindungsgemäßen Längseinsteller, insbesondere einem Längseinsteller gemäß der vorstehenden Beschreibung.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einem Längseinsteller,
- Fig. 2:: eine perspektivische Ansicht eines Schienenpaares des Längseinstellers nach Fig. 1,
- Fig.3:: eine perspektivische Schnittdarstellung des Schienenpaares gemäß Fig. 2 entlang der Linie III-III,
- Fig. 4:: schematisch eine vergrößerte Schnittdarstellung einer Kupplung zwischen Getriebemotor und Spindel des Längseinstellers,
- Fig. 5:: schematisch eine perspektivische Ansicht einer ersten Ausführungsform der Kupplung zwischen Getriebemotor und Spindel des Längseinstellers,
- Fig. 6:: eine vergrößerte perspektivische Schnittdarstellung der ersten Ausführungsform der Kupplung gemäß Fig. 5,
- Fig. 7:: eine vergrößerte perspektivische Schnittdarstellung der ersten Ausführungsform der Kupplung gemäß Fig. 5 mit einer alternativen Wellenverbindung,
- Fig. 8:: schematisch eine perspektivische Ansicht der ersten Ausführungsform der Kupplung mit der alternativen Wellenverbindung gemäß Fig. 7,
- Fig. 9:: schematisch eine perspektivische Ansicht einer zweiten Ausführungsform der Kupplung zwischen Getriebemotor und Spindel des Längseinstellers,
- Fig. 10:: eine vergrößerte perspektivische und teiltransparente Schnittdarstellung der zweiten Ausführungsform der Kupplung gemäß Fig. 9,
- Fig. 11:: eine vergrößerte perspektivische und teiltransparente Darstellung der zweiten Ausführungsform der Kupplung gemäß Fig. 9,
- Fig. 12:: eine weitere vergrößerte perspektivische und teiltransparente Schnittdarstellung der zweiten Ausführungsform der Kupplung gemäß Fig. 9,
- Fig. 13:: eine perspektivische Darstellung einer dritten Ausführungsform der Kupplung zwischen Getriebemotor und Spindel des Längseinstellers, und
- Fig. 14:: eine vergrößerte perspektivische und teiltransparente Schnittdarstellung der dritten Ausführungsform der Kupplung gemäß Fig. 13.

Einander entsprechende Teile sind in allen Figuren mit den gleichen Bezugszeichen versehen.

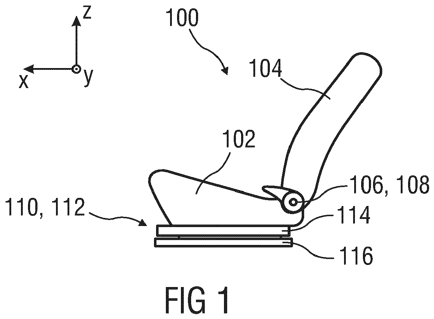

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 umfasst einen Längseinsteller 110. Der Längseinsteller 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt. Üblicherweise umfasst der Längseinsteller 110 zwei parallel zueinander angeordnete Schienenanordnungen 112. Die beiden Schienenanordnungen 112 können, insbesondere elektronisch, zueinander synchronisiert einstellbar sein. Nachfolgend ist nur eine der beiden baugleichen Schienenanordnungen 112 beschrieben.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeugs verbunden.

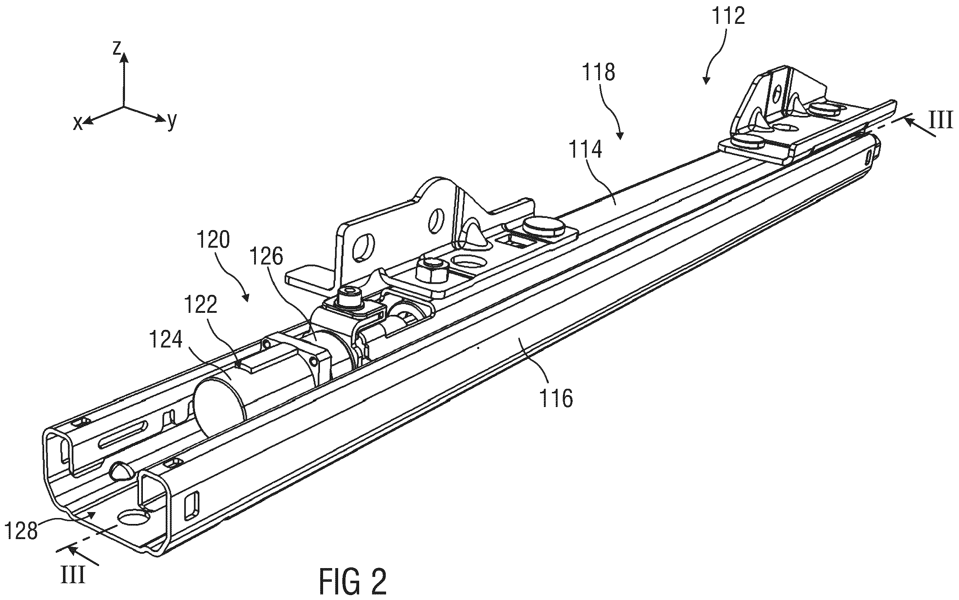

Figur 2 zeigt eine perspektivische Ansicht einer auch als Schienenpaar 118 bezeichneten Schienenanordnung 112 des Längseinstellers 110 nach Figur 1.

Der Längseinsteller 110 weist eine Antriebseinrichtung 120 zum Verstellen der Sitzschiene oder Oberschiene 114 relativ zu der Bodenschiene oder Unterschiene 116 auf. Die Antriebseinrichtung 120 weist einen Getriebemotor 122 auf. Der Getriebemotor 122 umfasst zumindest einen Motor 124 und eine Getriebeeinheit 126 auf. Mit anderen Worten: Der Motor 124 und die Getriebeeinheit 126 bilden eine Einheit.

Die Getriebeeinheit 126 und der Motor 124 sind wenigstens teilweise in einem zwischen der Oberschiene 114 und der Unterschiene 116 gebildeten Innenraum oder Hohlraum 128 angeordnet. Alternativ kann der Getriebemotor 122 vollständig innerhalb der Schienenanordnung 112, insbesondere innerhalb der Unterschiene 116, insbesondere innerhalb des Hohlraums 128, angeordnet sein, wie dargestellt.

Der Motor 124 ragt vorliegend stirnseitig zumindest teilweise an einem Ende der Oberschiene 114 in diese hinein. Alternativ kann der Motor 124 in nicht dargestellter Art und Weise durch eine Ausnehmung in der Oberschiene 114 in Vertikalrichtung z nach oben aus dieser hinaus, beziehungsweise durch diese hindurch ragen.

Die Getriebeeinheit 126 ist vorliegend vollständig in dem zwischen der Oberschiene 114 und der Unterschiene 116 gebildeten Hohlraum 128 angeordnet. Der Motor 124 und die Getriebeeinheit 126 sind vorliegend gemeinsam in einem Endbereich des Schienenpaares 118 angebracht. Dies ermöglicht eine einfache Zugänglichkeit des Motors 124 beziehungsweise der Getriebeeinheit 126, so dass diese Komponenten auch bei einem in einem Fahrzeug verbauten Längseinsteller 110 gegebenenfalls leicht austauschbar oder reparierbar sind.

Die Getriebeeinheit 126 ist mit der Oberschiene 114 verbindbar, insbesondere kraftschlüssig und formschlüssig, zum Beispiel verschraubt, oder stoffschlüssig, zum Beispiel mit einer Naht verschweißt, und/oder formschlüssig, zum Beispiel verpresst, um hohe Kräfte übertragen zu können.

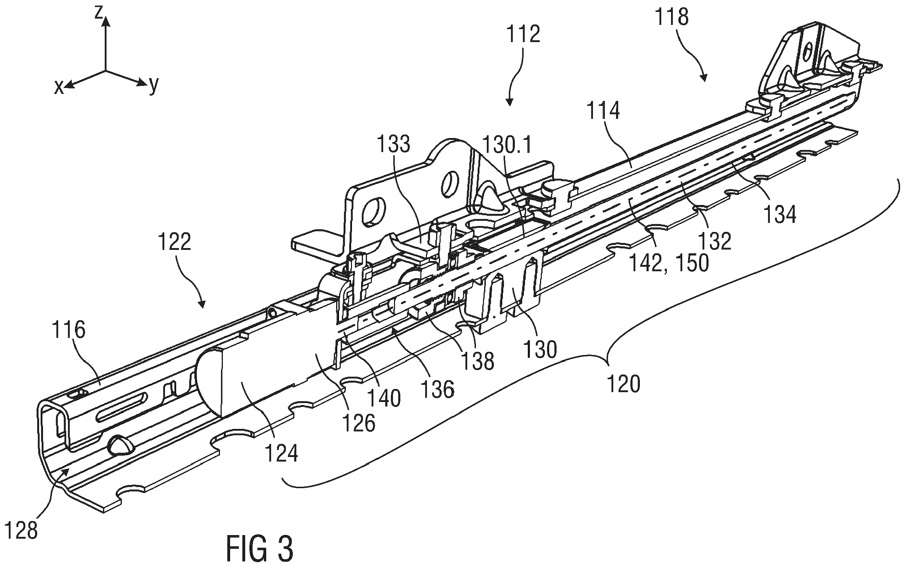

Figur 3 zeigt eine aufgeschnittene Längsdarstellung eines der Schienenpaare 118 des Längseinstellers 110.

Die Antriebseinrichtung 120 ist beispielsweise als ein Spindelantrieb ausgebildet. Die Antriebseinrichtung 120 umfasst mindestens den Motor 124, die Getriebeeinheit 126, einen zur Unterschiene 116 fixierten und ein Innengewinde 127 aufweisenden Spindelblock 130, und eine Spindel 132, die ein Außengewinde 134 aufweist. Die mittels des Motors 124 antreibbare Spindel 132 ist drehbar und längsbeweglich in dem Spindelblock 130, der an der Unterschiene 116 befestigt ist, gelagert.

Die Spindel 132 ist drehbar und mindestens über eine Spindelmutter 138 axial abgestützt gelagert. Im Beispiel sind zwei Spindelmuttern 138 vorgesehen. Die jeweilige Spindelmutter 138 ist mit der Oberschiene 114 fest verbunden. Die jeweilige Spindelmutter 138 ist verdrehgesichert auf der Spindel 132 positioniert und stützt sich axial an einem fest mit der Oberschiene 114 verbundenen Lagerblech 133 ab.

Die Spindel 132 ist um eine Spindelachse 142 drehbar in dem Spindelblock 130 und der Spindelmutter 138 an dem Lagerblech 133 gelagert. Der Getriebemotor 122, die Kupplungsanordnung 136 und die Spindel 132 sind auf einer gemeinsamen Achse 150 innerhalb des Schienenpaares 118 angeordnet. Beispielsweise ist die gemeinsame Achse 150 in dem Hohlraum 128 des Schienenpaares 118 angeordnet. Die gemeinsame Achse 150 ist von der Oberschiene 114 und der Unterschiene 116 umschlossen.

Bei feststehendem Spindelblock 130 ist die Spindel 132 zur Längsverstellung des Fahrzeugsitzes 100 (dargestellt in Figur 1) entlang der Spindelachse 142 im Spindelblock 130 längsbeweglich gelagert. Die in dem feststehenden Spindelblock 130 längsbeweglich und drehbar gelagerte Spindel 132 setzt dabei eine Längsverstellung des Fahrzeugsitzes 100 (dargestellt in Figur 1) um. Ein Innengewinde 130.1 des Spindelblocks 130 ist insbesondere als ein Bewegungsgewinde ausgebildet. Das Innengewinde 130.1 setzt eine Drehbewegung der Spindel 132 in eine Linearbewegung der Spindel 132 relativ zum Spindelblock 130 (dargestellt in Figur 3) um. Dazu ist das Innengewinde 130.1 beispielsweise als ein Gleitgewinde, ein Trapezgewinde oder ein Steilgewinde ausgebildet.

Die Antriebseinrichtung 120 umfasst darüber hinaus die Kupplungsanordnung 136 zur Kopplung des Getriebemotors 122, insbesondere der Getriebeeinheit 126, mit der Spindel 132. Die Kupplungsanordnung 136 ist insbesondere zwischen der Spindel 132 und einer Abtriebswelle 140 des Getriebemotors 122 angeordnet. Die Kupplungsanordnung 136 ist zum Dämpfen von Schwingungen und/oder zum Ausgleich von Toleranzen, insbesondere Lagetoleranzen, ausgebildet.

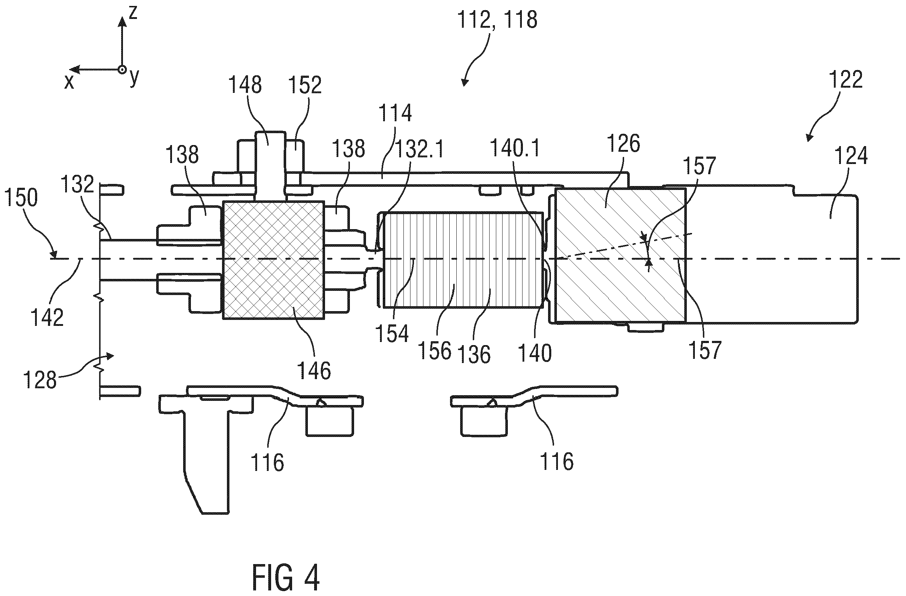

Figur 4 zeigt eine schematische Schnittdarstellung eines stirnseitigen Endes des Längseinstellers 110 von Figur 2, insbesondere eine vergrößerte Schnittdarstellung der Kupplungsanordnung 136 zwischen Getriebemotor 122 und Spindel 132 des Längseinstellers 110.

Figur 4 zeigt dasjenige stirnseitige Ende des Längseinstellers 110, in welchem beispielsweise zwei Spindelmuttern 138, die Kupplungsanordnung 136, die Getriebeeinheit 126 und der Motor 124 angeordnet sind.

Die zwei Spindelmuttern 138, die Kupplungsanordnung 136 und zumindest teilweise die Getriebeeinheit 126 sind vollständig in dem Hohlraum 128 des Schienenpaares 118 angeordnet. Der Motor 124 steht aus dem Hohlraum 128 axial heraus. Ein zwischen den zwei Spindelmuttern 138 angeordnetes Spindellager 146 ist mittels eines Verbindungsbolzens 148 und einer Verbindungsmutter 152 mit der Oberschiene 114 verbunden.

Die Spindel 132 ist mittels der Abtriebswelle 140 des Getriebemotors 122 antreibbar. Zumindest die als Ausgangswelle des Getriebemotors 122 wirkende Abtriebswelle 140, eine Drehachse 154 der drehbaren Kupplungsanordnung 136 und die Spindelachse 142 der Spindel 132 sind weitgehend axial fluchtend angeordnet. Weitgehend axial fluchtend bedeutet, dass die Abtriebswelle 140, die Drehachse 154 der drehbaren Kupplungsanordnung 136 und die Spindelachse 142 mit Winkelabweichungen und/oder Axialversatz in einer Flucht liegen können.

Zur Kopplung der Spindel 132 mit der Abtriebswelle 140 und somit zur Drehmomentübertragung ist die Kupplungsanordnung 136 vorgesehen.

Die Kupplungsanordnung 136 umfasst eine flexible Kupplung 156. Die flexible Kupplung 156 ist formschlüssig und/oder kraftschlüssig einerseits mit einem Spindelende 132.1 und andererseits mit einem Wellenende 140.1 der Abtriebswelle 140 verbunden. Die flexible Kupplung 156 kann dabei das Spindelende 132.1 und das Wellenende 140.1 direkt flexibel miteinander verbinden.

Beispielsweise kann die flexible Kupplung 156 das Spindelende 132.1 und das Wellenende 140.1 derart flexibel miteinander verbinden, dass diese beiden Enden 132.1, 140.1 biegsam und/oder stauchbar miteinander verbunden sind. Beispielsweise können sich das Spindelende 132.1 und das Wellenende 140.1 mittels der flexiblen Kupplung 156 flexibel aufeinander zubewegen oder voneinander wegbewegen oder einen Winkelversatz ausgleichend relativ zueinander bewegen.

Insbesondere kann die flexible Kupplung 156 das Spindelende 132.1 und das Wellenende 140.1 derart flexibel miteinander verbinden, dass die Spindel 132 und die Abtriebswelle 140 schwingungstechnisch voneinander getrennt sind. Mit anderen Worten: Auftretende Schwingungen an der Spindel 132 oder der Welle 140 werden nicht übertragen. Diese auftretenden Schwingungen können von der flexiblen Kupplung 156 aufgenommen und gedämpft, insbesondere reduziert oder vollständig aufgenommen, werden.

Beispielsweise kann die flexible Kupplung 156 das Spindelende 132.1 und das Wellenende 140.1 derart flexibel miteinander verbinden, dass diese Enden 132.1, 140.1 in mindestens zwei Freiheitsgraden, insbesondere in Längsrichtung x, in Querrichtung y und/oder in Vertikalrichtung z oder einer Zwischenstellung, relativ zueinander beweglich gelagert sind. Beispielsweise können das Spindelende 132.1 und das Wellenende 140.1 zumindest in einer Ebene zur Spindelachse und in einer Ebene senkrecht zur Spindelachse 142 und/oder einen Winkelversatz ausgleichend beweglich zueinander gelagert sein.

Die flexible Kupplung 156 ist eingerichtet, Schwingungen zu dämpfen und/oder einen Versatz 157, insbesondere einen Winkelversatz und/oder einen Parallelversatz, zwischen Spindelende 132.1 und Wellenende 140.1 auszugleichen.

Nachfolgend werden verschiedene Ausführungsformen der flexiblen Kupplung 156 beschrieben. Alle anderen Komponenten der Getriebeeinheit 126 und der Antriebseinrichtung 120 sind für alle nachfolgend beschriebenen Ausführungsformen gleich aufgebaut und werden mit den gleichen Bezugszeichen beschrieben.

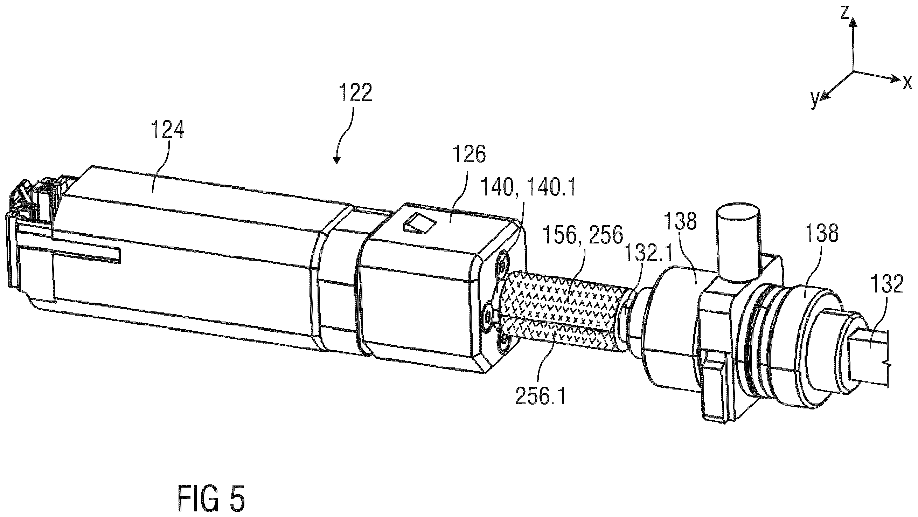

Figur 5 zeigt schematisch eine perspektivische Ansicht einer ersten Ausführungsform der flexiblen Kupplung 156, welche als eine Schlauchkupplung 256 ausgebildet ist.

Die Schlauchkupplung 256 verbindet die drehbar gelagerte Spindel 132 und die Abtriebswelle 140 des Getriebemotors 122. Die Schlauchkupplung 256 kann formschlüssig und/oder kraftschlüssig einerseits mit dem Spindelende 132.1 der Spindel 132 und andererseits mit dem Wellenende 140.1 der Abtriebswelle 140 verbunden sein.

Die Schlauchkupplung 256 kann drehsteif ausgebildet sein. Beispielsweise kann die Schlauchkupplung 256 aus einem umspritzten Gewebe 256.1 gebildet sein. Die Schlauchkupplung 256 kann als ein Spritzgussteil ausgebildet sein. Beispielsweise kann das Gewebe 256.1 als ein Kreuzgewebe mit kreuzweise gewebter Fadenanordnung oder Diagonalgewebe mit diagonal gewebter Fadenanordnung ausgebildet und von einem Kunststoffmaterial, insbesondere einem Elastomermaterial oder einem Thermoplastmaterial umspritzt sein. Durch ein solches umspritztes Gewebe 256.1 als Schlauchkupplung 256 kann die Drehsteifigkeit zur Übertragung von Drehmomenten zwischen Spindel 132 und Abtriebswelle 140 erhöht werden.

Alternativ kann auch eine andere Form von Geometrien und Profilen, wie zum Beispiel ineinandergreifende Verzahnungen, verwendet werden, welche eine Formschlussverbindung oder Kraftschlussverbindung oder Stoffschlussverbindung zwischen Schlauchkupplung 256 und Spindelende 132.1 einerseits und Wellenende 140.1 andererseits ermöglichen.

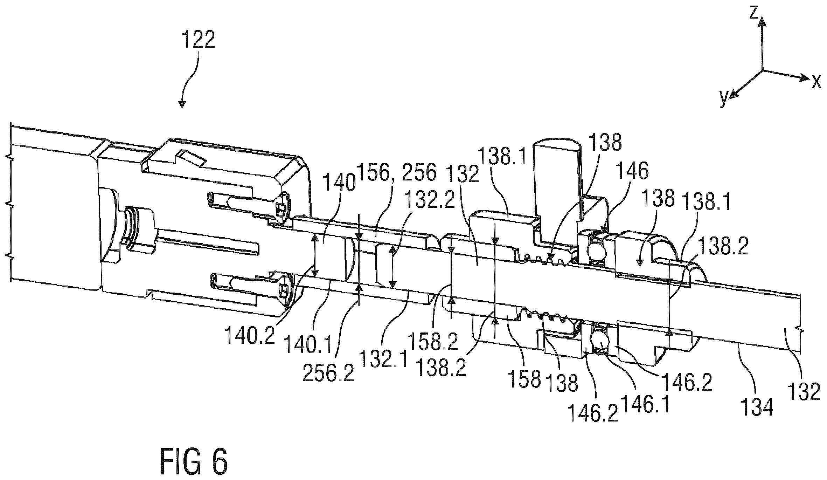

Figur 6 zeigt eine vergrößerte perspektivische Schnittdarstellung der ersten Ausführungsform der als Schlauchkupplung 256 ausgebildeten flexiblen Kupplung 156 gemäß Figur 5.

Die Schlauchkupplung 256 kann einen Innendurchmesser 256.2 aufweisen, der kleiner ist als ein Außendurchmesser 132.2 des Spindelendes 132.1 und ein Außendurchmesser 140.2 des Wellenendes 140.1. Hierdurch kann eine Kraftschlussverbindung, insbesondere eine Reibschlussverbindung, zwischen der Schlauchkupplung 256 und einerseits dem Spindelende 132.1 und andererseits dem Wellenende 140.1 erzielt werden.

Im gezeigten Beispiel sind zwei Spindelmuttern 138 verdrehgesichert mit der Spindel 132 verbunden.

Die in Richtung zum Getriebemotor 122 angeordnete Spindelmutter 138 ist beispielsweise mittels einer Einpressbuchse 158 verdrehgesichert mit der Spindel 132 verbunden. Die Einpressbuchse 158 ist auf das Spindelende 132.1 aufsteckbar und in einem Bund 138.1 der Spindelmutter 138 einpressbar. Der Bund 138.1 weist einen größeren Innendurchmesser 138.2 als der Außendurchmesser 132.2 des Spindelendes 132.1 auf. Die Einpressbuchse 158 weist einen größeren Außendurchmesser 158.1 als der Innendurchmesser 138.2 auf, so dass die Einpressbuchse 158 in den Bund 138.1 einpressbar und kraftschlüssig, insbesondere reibschlüssig, mit dem Bund 138.1 verbindbar ist. Zudem weist die Einpressbuchse 158 einen

Innendurchmesser 158.2 auf, der kleiner als der Außendurchmesser 132.2 des Spindelendes 132.1 ausgebildet ist, so dass die Einpressbuchse 158 kraftschlüssig, insbesondere reibschlüssig, mit dem Spindelende 132.1 verbindbar ist.

Die Einpressbuchse 158 kann zusätzlich derart ausgebildet und auf der Spindel 132 angeordnet sein, dass diese Einpressbuchse 158 in Längsrichtung x als Längsbegrenzung für die Schlauchkupplung 256 dient.

Die jeweilige Spindelmutter 138 kann zusätzlich abschnittsweise beispielsweise mittels einer Formschlussverbindung und/oder einer Kraftschlussverbindung, insbesondere einer Reibschlussverbindung, mit der Spindel 132 verbunden sein. Beispielsweise kann die jeweilige Spindelmutter 138 mit einem Innengewinde 138.0 versehen sein. Das Innengewinde 138.0 ist formschlüssig mit dem Außengewinde 134 der Spindel 132 verbunden.

Alternativ oder zusätzlich (nicht näher dargestellt) kann zumindest eine der Spindelmuttern 138 einen Innendurchmesser 138.2 aufweisen, der geringer als der Außendurchmesser 132.2 der Spindel 132 ist.

Das Spindellager 146 kann beispielsweise ein Kugellager oder ein Rollenlager oder ein Axialkugellager 146.1 zur Aufnahme von Axialkräften in einer ersten Lastrichtung und/oder eine Lagerbuchse 146.2 für die radiale Lagerung der Spindel 132 und zur Aufnahme von Axialkräften in einer zweiten Lastrichtung umfassen und zwischen den beiden Spindelmuttern 138 angeordnet sein.

Mittels einer solchen einfachen Schlauchkupplung 256 gemäß Figuren 5 bis 8 können Schwingungsübertragungen reduziert oder vermieden werden und Wellenversatze ausgeglichen werden. Zudem kann eine aufwendige Justierung von Spindel 132 und Abtriebswelle 140 entfallen.

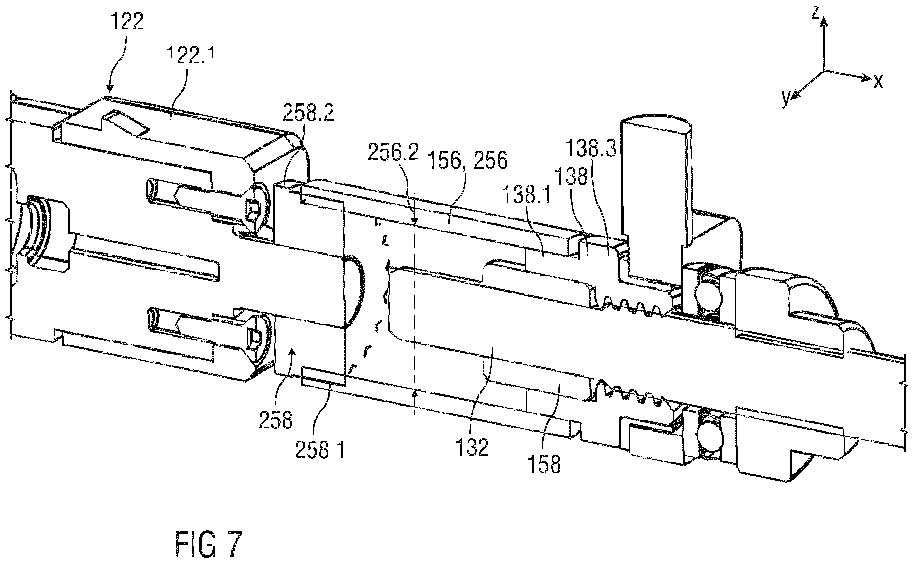

Figur 7 zeigt eine vergrößerte perspektivische Schnittdarstellung der ersten Ausführungsform der als Schlauchkupplung 256 ausgebildeten Kupplung 156 mit einer alternativen Wellenverbindung. Anstelle einer direkten Kraftschlussverbindung der Schlauchkupplung 256 auf der Spindel 132 und der Abtriebswelle 140 gemäß Figuren 5 und 6 weist die Schlauchkupplung 256 nach Figur 7 einen größeren Durchmesser, insbesondere einen größeren Innendurchmesser 256.2, auf. Die Schlauchkupplung 256 nach Figur 7 ist über ein Kopplungselement 258 auf dem Wellenende 140.1 angeordnet und mittels einer Formschlussverbindung und/oder Kraftschlussverbindung mit der Abtriebswelle 140, insbesondere verpresst. Insbesondere ist das Kopplungselement 258 auf das Wellenende 140.1 der Abtriebswelle 140 gepresst. Mittels des Kopplungselements 258 ist ein Kontaktdurchmesser zur Schlauchkupplung 256 vergrößert.

Zur Formschlussverbindung kann das Kopplungselement 258 einen Rändelrand 258.1 oder dergleichen, wie zum Beispiel einen Kordelrand, aufweisen.

Zusätzlich kann das Kopplungselement 258 einen Bund 258.2 aufweisen. Der Bund 258.2 ist eingerichtet, die Schlauchkupplung 256 in Längsrichtung x und somit axial festzustellen oder definiert zu positionieren. Hierdurch ist sichergestellt, dass die Schlauchkupplung 256 nicht in Kontakt mit einem feststehenden Gehäuse 122.1 des Getriebemotors 122 gelangt.

Spindelseitig ist die Schlauchkupplung 256 auf die Spindelmutter 138, insbesondere auf den vergrößerten Bund 138.1 der antriebseitigen Spindelmutter 138 gepresst.

Der Bund 138.1 ist derart in Längsrichtung x ausgebildet, dass er gleichzeitig als Längsbegrenzung für die Schlauchkupplung 256 dient.

Die antriebsseitige Spindelmutter 138 ist wiederum verdrehgesichert mit der Spindel 132 verbunden, wie zuvor anhand der Figuren 5 bis 6 beschrieben. Hierzu ist in analoger Art und Weise für alle hier beschriebenen Ausführungsbeispiele die Einpressbuchse 158 auf die Spindel 132 gepresst.

Die antriebsseitige Spindelmutter 138 kann am Außenumfang einen Anschlagring 138.3, insbesondere einen umlaufenden Bund, aufweisen, der als Längsbegrenzung oder axiale Begrenzung für eine Schlauchmontage der Schlaukupplung 256 dient.

Auch können zusätzlich Rändelränder 258.1 und/oder Kordelränder analog dem Zusatzteil oder Kopplungselement 258 am Bund 138.1 der Spindelmutter 138 und/oder am Außenumfang des Kopplungselements 258 zur Formschlussverbindung und/oder Drehmomentübertragung vorgesehen sein.

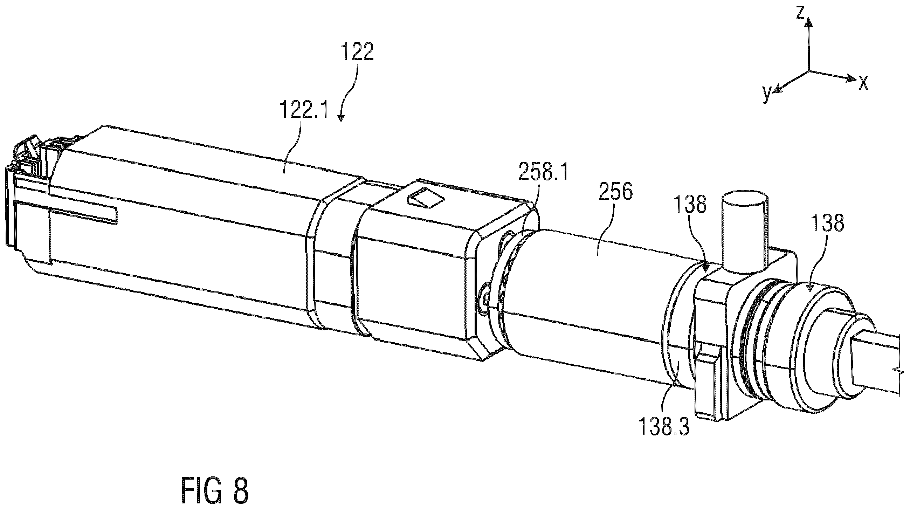

Figur 8 zeigt schematisch eine perspektivische Ansicht der ersten Ausführungsform der als Schlauchkupplung 256 ausgebildeten Kupplung 156 mit der alternativen Wellenverbindung gemäß Figur 7. Die Schlauchkupplung 256 ist nicht transparent dargestellt.

Der Rändelrand 258.1 der Schlauchkupplung 256 kann als eine separate Einheit, insbesondere als eine Rändelscheibe oder ein Rändelring, ausgebildet sein und zwischen der Schlauchkupplung 256 und dem Gehäuse 122.1 des Getriebemotors 122 angeordnet sein.

Die Spindelmutter 138 kann den vom Bund 138.1 (dargestellt in Figur 7) senkrecht abstehenden Anschlagring 138.3 aufweisen. Der Anschlagring 138.3 und der separate Rändelrand 258.1 dienen als Längsbegrenzung der zwischen diesen angeordneten Schlauchkupplung 256 bei der Montage.

Zusätzlich kann der Anschlagring 138.3 für Formschluss und Drehmomentübertragung gerändelt oder gebördelt ausgebildet sein (nicht näher dargestellt).

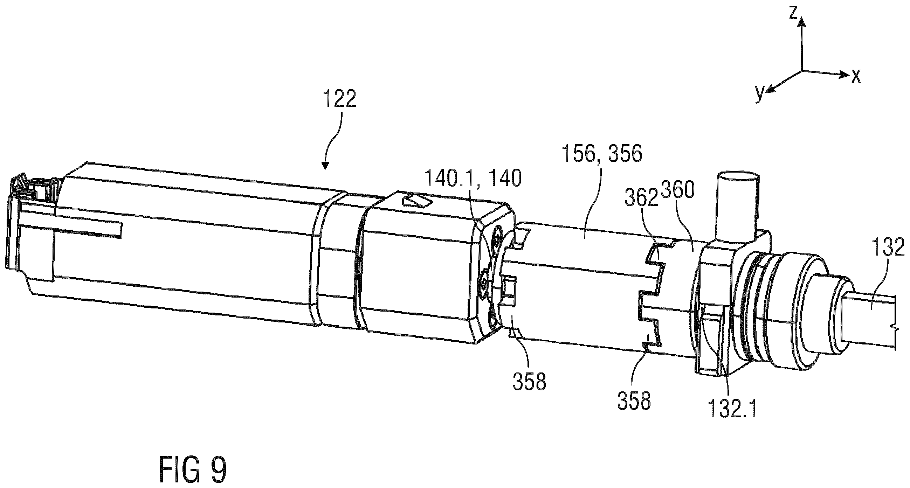

Figur 9 zeigt schematisch eine perspektivische Ansicht einer zweiten Ausführungsform der als Klauenkupplung 356 ausgebildeten flexiblen Kupplung 156 zwischen Getriebemotor 122 und Spindel 132 des Längseinstellers 110 (dargestellt in Figuren 1, 2).

Die Klauenkupplung 356 ist formschlüssig mit dem Spindelende 132.1 und dem Wellenende 140.1 gekoppelt. Die Klauenkupplung 356 umfasst beispielsweise an seinen längsseitigen Enden Klauen 358. Auf dem Spindelende 132.1 ist ein Mutterelement 360 mit Klauengegenelementen 362 angeordnet. Das Mutterelement 360 ist mittels einer Formschlussverbindung und/oder einer Kraftschlussverbindung verdrehgesichert auf der Spindel 132 angeordnet.

Zusätzlich kann das Wellenende 140.1 mit Klauengegenelementen 362 versehen sein (nicht dargestellt).

Die Klauenkupplung 356 ist hülsenförmig oder zylinderförmig ausgebildet. Die Klauenkupplung 356 ist beispielsweise aus einem Elastomermaterial oder einem Thermoplastmaterial gebildet. Zusätzlich kann die Klauenkupplung 356 Gewebeverstärkungen analog zu der flexiblen Kupplung 156 (dargestellt in Figur 5) umfassen.

Die Klauenkupplung 356 ist insbesondere als ein Spritzgussteil ausgebildet. Die Klauenkupplung 356 kann beispielsweise primär mittels einer Formschlussverbindung einerseits mit der Abtriebswelle 140, insbesondere dem Wellenende 140.1, und andererseits mit dem, zum Beispiel auf die Spindel 132, aufgepressten und gegenüber der Spindel 132 verdrehgesicherten Mutterelement 360 verbunden sein.

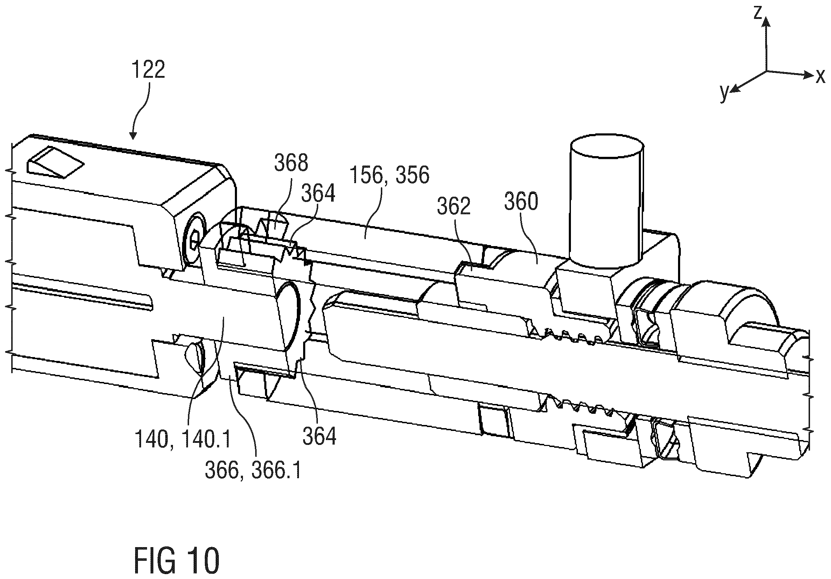

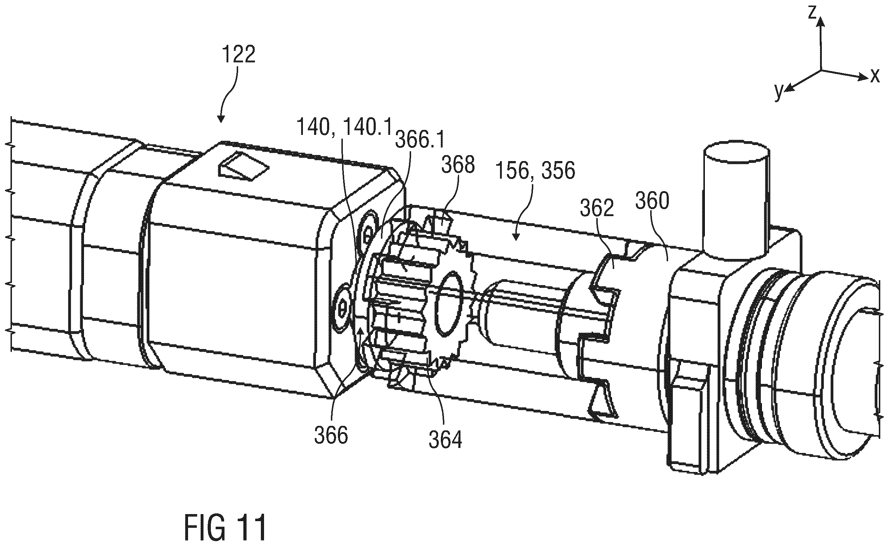

Figuren 10 bis 12 zeigen jeweils eine vergrößerte perspektivische und teiltransparente Schnittdarstellung der zweiten Ausführungsform der flexiblen Kupplung 156, die als Klauenkupplung 356 gemäß Figur 9 ausgebildet ist.

Anstelle der Klauen 358 und der Klauengegenelemente 362 ist antriebsseitig im Bereich der Abtriebswelle 140, insbesondere dessen Wellenende 140.1, auf dieser eine Außenverzahnung 364 vorgesehen. Alternativ kann ein Zusatzelement 366 (nicht näher dargestellt), insbesondere ein Zahnrad oder Zahnring, mit einer solchen Außenverzahnung 364 vorgesehen sein. Die Außenverzahnung 364 ragt in einen Hohlraum der Klauenkupplung 356 hinein. Das Zusatzelement 366 (auch aufgepresster Mitnehmer genannt) kann einen Flansch 366.1 aufweisen, um die Klauenkupplung 356 bei Montage axial in die Aussparungen der Klauengegenelemente 362 zu drücken.

Die Klauenkupplung 356 kann in einem überlappenden Bereich mit der Außenverzahnung 364 der Abtriebswelle 140 eine Mitnahmekontur 368, zum Beispiel eine korrespondierende Innenverzahnung oder eine Mitnahmezunge oder einen Mitnahmezahn, aufweisen. Alternativ kann die Klauenkupplung 356 antriebsseitig im überlappenden Bereich mit dem Wellenende 140.1 formschlüssig, zum Beispiel durch Aufpressen, mit der Abtriebswelle 140 verbunden sein, wie zuvor anhand der Figuren 5 und 6 beschrieben.

Die beispielhafte Klauenkupplung 356 nach Figuren 9 und 10 kann auf beiden Enden sowohl als Innenkontur die Mitnahmekontur 368 zur Ankopplung mit der als Antriebsverzahnung ausgebildeten Außenverzahnung 364 der Abtriebswelle 140 als auch die Klauen 358 für die Klauengegenelemente 362 für die Ankopplung mit dem Mutterelement 360 umfassen.

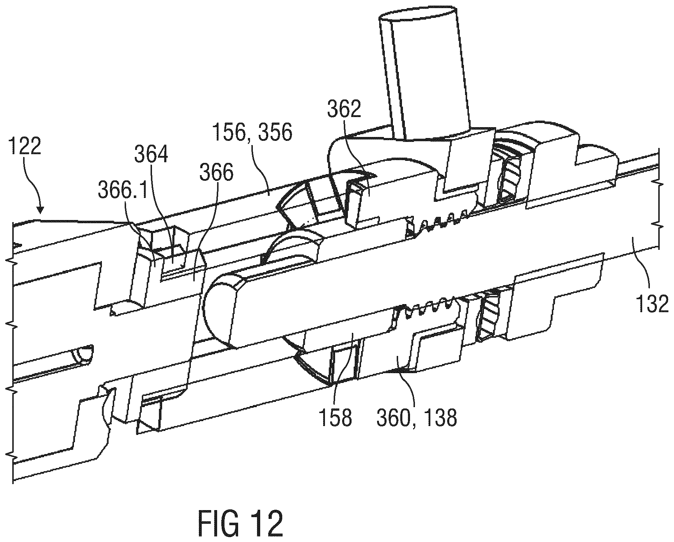

Das Mutterelement 360 kann auch durch die Spindelmutter 138 gebildet sein, wie in Figur 12 gezeigt. In diesem Fall ist der Bund 138.1 der Spindelmutter 138 mit den Klauengegenelementen 362 versehen. Die Spindelmutter 138 ist mittels der Einpressbuchse 158 verdrehgesichert auf der Spindel 132 angeordnet.

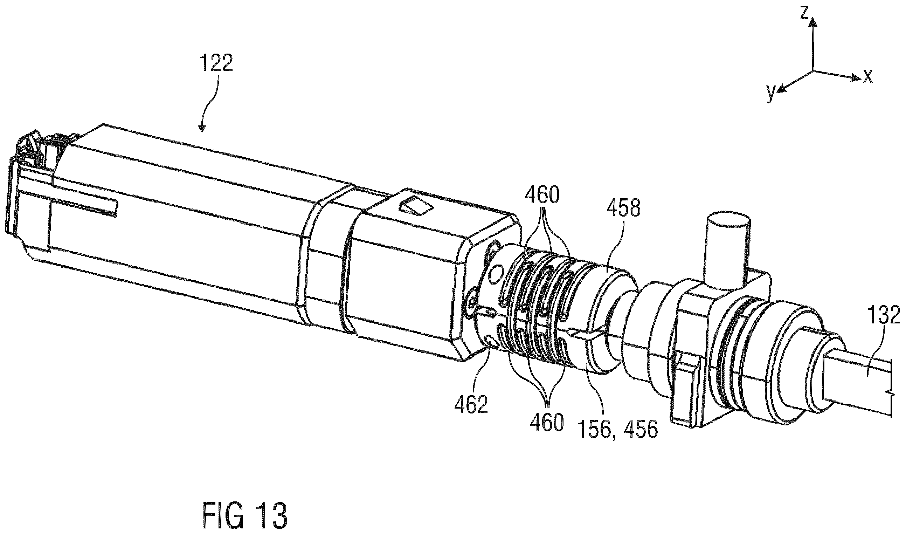

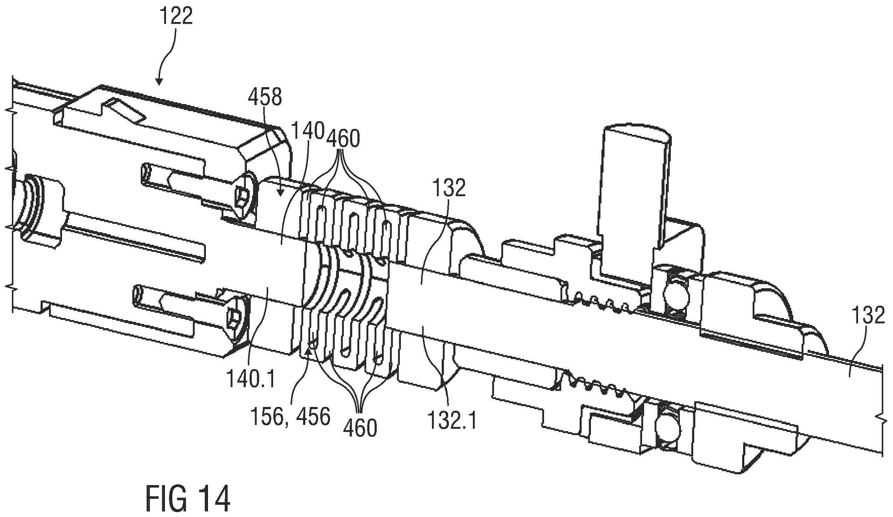

Figur 13 zeigt eine perspektivische Darstellung einer dritten Ausführungsform der flexiblen Kupplung 156 zwischen Getriebemotor 122 und Spindel 132. Die flexible Kupplung 156 nach Figuren 13 und 14 ist als eine Ausgleichskupplung 456 ausgebildet.

Die Ausgleichskupplung 456 ist ausgebildet und eingerichtet, einen Versatz 157 (dargestellt in Figur 4), insbesondere einen Winkelversatz und/oder einen Parallelversatz, zwischen der Spindel 132 und der Abtriebswelle 140 auszugleichen. Die Ausgleichskupplung 456 kann als ein Spritzgussteil ausgebildet sein. Die Ausgleichskupplung 456 kann aus einem Elastomermaterial oder einem Thermoplastmaterial oder aus Metall gebildet sein.

Beispielsweise kann die Ausgleichskupplung 456 als eine Hülsenkupplung 458 ausgebildet sein, welche mehrere Ausnehmungen 460 umfasst. Die Ausnehmungen 460 sind insbesondere derart ausgebildet und angeordnet, dass wechselseitig Biegebereiche und/oder Dehnbereiche für die Ausgleichskupplung 456 gebildet sind, um Verformungen, insbesondere Biegungen beziehungsweise Dehnungen, zuzulassen. Beispielsweise können die Ausnehmungen 460 als Schlitze oder Nuten oder Rillen ausgebildet sein. Die Ausnehmungen 460 können parallel versetzt und/oder senkrecht zueinander angeordnet sein. Beispielsweise können die Ausnehmungen 460 90° versetzt zueinander angeordnet sein.

Somit sind Winkelversatze und/oder Parallelversatze über die versetzt und um 90° gegeneinander angeordneten Ausnehmungen 460 in Schlitzform kompensierbar, da so wechselseitig definierte Biegebereiche eine Verformung zulassen, unabhängig, wie der Drehwinkel der Abtriebswelle 140 bezogen auf eine Winkelabweichung der verbundenen Drehachsen ist.

Die Ausgleichskupplung 456 kann formschlüssig und/oder kraftschlüssig einerseits mit dem Spindelende 132.1 der Spindel 132 und andererseits mit dem Wellenende 140.1 der Abtriebswelle 140 verbunden sein.

Beispielsweise kann die Ausgleichskupplung 456 mittels einer Klemmverbindung, einer Reibschlussverbindung oder dergleichen einerseits mit dem Spindelende 132.1 und andererseits mit dem Wellenende 140.1 verbunden sein. Alternativ kann die Ausgleichskupplung 456 mittels einer Stoffschlussverbindung, beispielsweise mittels einer Klebeverbindung oder einer Schweißverbindung, einerseits mit dem Spindelende 132.1 und andererseits mit dem Wellenende 140.1 verbunden sein.

Befestigt wird diese Ausgleichskupplung 456 beispielsweise auf der Abtriebswelle 140 und der Spindel 132 entweder über eine Klemmkraft, erzeugt beispielsweise über Schrauben an Eingreifpunkten 462, oder über eine Klebeverbindung. Aufpressen ist auch denkbar. Weitere bekannte Verbindungsformen sind ebenfalls möglich.

### Bezugszeichenliste

- 100: Fahrzeugsitz
- 102: Sitzteil
- 104: Rückenlehne
- 106: Beschlag
- 108: Drehachse
- 110: Längseinsteller
- 112: Schienenanordnung
- 114: erste Schiene (Oberschiene)
- 116: zweite Schiene (Unterschiene)
- 118: Schienenpaar
- 120: Antriebseinrichtung
- 122: Getriebemotor
- 122.1: Gehäuse
- 124: Motor
- 126: Getriebeeinheit
- 127: Innengewinde
- 128: Hohlraum
- 130: Spindelblock
- 130.1: Innengewinde
- 132: Spindel
- 132.1: Spindelende
- 132.2: Außendurchmesser
- 133: Lagerblech
- 134: Außengewinde
- 136: Kupplungsanordnung
- 138: Spindelmutter
- 138.0: Innengewinde
- 138.1: Bund
- 138.2: Innendurchmesser
- 138.3: Anschlagring
- 140: Abtriebswelle
- 140.1: Wellenende
- 140.2: Außendurchmesser
- 142: Spindelachse
- 146: Spindellager
- 146.1: Axialkugellager
- 146.2: Lagerbuchse
- 148: Verbindungsbolzen
- 150: gemeinsame Achse
- 152: Verbindungsmutter
- 154: Drehachse der Kupplungsanordnung
- 156: flexible Kupplung
- 157: Versatz
- 158: Einpressbuchse
- 158.1: Außendurchmesser
- 158.2: Innendurchmesser

- 256: Schlauchkupplung
- 256.1: Gewebe
- 256.2: Innendurchmesser
- 258: Kopplungselement
- 258.1: Rändelrand
- 258.2: Bund

- 356: Klauenkupplung
- 358: Klauen
- 360: Mutterelement
- 362: Klauengegenelement
- 364: Außenverzahnung
- 366: Zusatzelement
- 366.1: Flansch
- 368: Mitnahmekontur

- 456: Ausgleichskupplung
- 458: Hülsenkupplung
- 460: Ausnehmung
- 462: Eingreifpunkt

- x: Längsrichtung
- y: Querrichtung
- z: Vertikalrichtung

## Patentansprüche

1. Längseinsteller (110), umfassend mindestens:
- ein Schienenpaar (118) und
- eine Antriebseinrichtung (120) für das Schienenpaar (118),
wobei das Schienenpaar (118) eine erste Schiene (114) und eine zweite Schiene (116) aufweist, an der die erste Schiene (114) verschiebbar geführt ist,
wobei die Antriebseinrichtung (120) mindestens einen Getriebemotor (122) mit einer Abtriebswelle (140), einem Motor (124), einer Getriebeeinheit (126), einer über die Getriebeeinheit (126) von der Abtriebswelle (140) antreibbare Spindel (132) und einer Kupplungsanordnung (136) zur Kopplung der Spindel (132) und der Abtriebswelle (140) aufweist,
wobei die Spindel (132) um eine Spindelachse (142) drehbar gelagert ist,
**dadurch gekennzeichnet, dass**
die Kupplungsanordnung (136) eine flexible Kupplung (156) umfasst, die formschlüssig und/oder kraftschlüssig einerseits mit einem Spindelende (132.1) und andererseits mit einem Wellenende (140.1) der Abtriebswelle (140) verbunden ist und die das Spindelende (132.1) und das Wellenende (140.1) flexibel miteinander verbindet.

2. Längseinsteller (110) nach Anspruch 1,
wobei die flexible Kupplung das Spindelende (132.1) und das Wellenende (140.1) derart flexibel miteinander verbindet, dass diese biegsam und/oder stauchbar miteinander verbunden sind. enden flexibel aufeinander zubewegt oder voneinander wegbewegt oder Winkelversatz ausgleichend

3. Längseinsteller (110) nach Anspruch 1 oder 2,
wobei die flexible Kupplung das Spindelende (132.1) und das Wellenende (140.1) derart flexibel miteinander verbindet, dass die Spindel und die Abtriebswelle schwingungstechnisch voneinander getrennt sind.

4. Längseinsteller (110) nach einem der vorhergehenden Ansprüche,
wobei die flexible Kupplung das Spindelende (132.1) und das Wellenende (140.1) derart flexibel miteinander verbindet, dass diese in mindestens zwei Freiheitsgraden - in einer Ebene zur Spindelachse und in einer Ebene senkrecht zur Spindelachse - beweglich zueinander gelagert sind.

5. Längseinsteller (110) nach einem der vorhergehenden Ansprüche,
wobei die flexible Kupplung das Spindelende (132.1) und das Wellenende (140.1) flexibel miteinander verbindet und eingerichtet ist, Schwingungen zu dämpfen und/oder einen Versatz (157) zwischen Spindelende (132.1) und Wellenende (140.1) auszugleichen.

6. Längseinsteller (110) nach einem der vorhergehenden Ansprüche,
wobei die flexible Kupplung (156) als eine Schlauchkupplung (256) ausgebildet ist.

7. Längseinsteller (110) nach Anspruch 6,
wobei die Schlauchkupplung (256) einen Innendurchmesser (256.2) aufweist, der kleiner ist als ein Außendurchmesser (132.2, 140.2) des Spindelendes (132.1) und des Wellenendes (140.1).

8. Längseinsteller (110) nach Anspruch 6 oder 7,
wobei die Schlauchkupplung (256) drehsteif ausgebildet ist.

9. Längseinsteller (110) nach einem der Ansprüche 1 bis 5,
wobei die flexible Kupplung (156) als eine Klauenkupplung (356) ausgebildet ist.

10. Längseinsteller (110) nach Anspruch 9,
wobei die Klauenkupplung (356) formschlüssig mit dem Spindelende (132.1) und dem Wellenende (140.1) gekoppelt ist.

11. Längseinsteller (110) nach Anspruch 9 oder 10,
wobei die Klauenkupplung (356) an beiden Enden jeweils mit Klauen (358) versehen ist und ein auf dem Spindelende (132.1) formschlüssig angeordnetes Mutterelement (360) mit Klauengegenelementen (362) versehen ist.

12. Längseinsteller (110) nach einem der Ansprüche 1 bis 5,
wobei die flexible Kupplung (156) als eine Ausgleichskupplung (456) ausgebildet und eingerichtet ist, einen Versatz (157), insbesondere einen Winkelversatz und/oder einen Parallelversatz, zwischen der Spindel (132) und der Abtriebswelle (140) auszugleichen.

13. Längseinsteller (110) nach Anspruch 12,
wobei die Ausgleichskupplung (456) als eine Hülsenkupplung (458) ausgebildet ist, welche mehrere Ausnehmungen (460) umfasst, die derart ausgebildet und angeordnet sind, dass wechselseitig Biegebereiche gebildet sind.

14. Fahrzeugsitz (100) mit einem Längseinsteller (110) nach einem der vorhergehenden Ansprüche.
